# EUROPEAN PATENT APPLICATION

(11) **EP 2 390 830 A1**
(43) Date of publication of application: **30.11.2011**
(21) Application number: 11153180.2
(22) Date of filing: 03.02.2011
(51) Int. Cl.: G06Q 30/00

(54) **Virtual reality space provision system, virtual reality space provision method and program**

(30) Priority: 31.05.2010 JP 2010124750; 25.11.2010 JP 2010262883
(71) Applicant: Sony Computer Entertainment Inc., Tokyo 108-0075 (JP)
(72) Inventor: Takayama, Yuya, Minato-ku Tokyo 108-0075 (JP); Kawato, Hiroyuki, Minato-ku Tokyo 108-0075 (JP)
(74) Representative: Turner, James Arthur

(57) **Abstract**

A main processing unit (21) in a virtual reality space provision system (500) builds a virtual reality space online. An action evaluation unit (25) evaluates an action of a user participating in the virtual reality space by use of an avatar. A point allocation unit (24) allocates a point to the user to be used in the virtual reality space in accordance with the evaluation. For example, the action evaluation unit (25) evaluates participation by a user in an event held in the virtual reality space, the behavior of the user in the event, or whether the user wins or loses a game in the event.

## Description

The present invention relates to virtual reality space provision systems, methods and programs.

Recently, online 3D user communities have become popular. Users can create an avatar and log in to a virtual world to enjoy realtime communication, shopping, reforming of the room assigned to the user, games, etc.

The community grows through a positive feedback: the larger the participants, the more realistic the community will be, which in turn increases the participants.

Various respective aspects and features of the invention are defined in the appended claims. Combinations of features from the dependent claims may be combined with features of the independent claims as appropriate and not merely as explicitly set out in the claims.

The present invention addresses the issue and a general purpose thereof is to provide a technology of increasing participants in a community in a virtual reality space built online.

According to embodiments of the present invention, a virtual reality space provision system comprises: a main processing unit configured to build a virtual reality space online; an action evaluation unit configured to evaluate an action of a user participating in the virtual reality space by use of an avatar; and a point allocation unit configured to allocate a point to the user to be used in the virtual reality space in accordance with the evaluation.

Another embodiment of the present invention is also a virtual reality space provision system. The virtual reality space provision system comprises: a main processing unit configured to build a virtual reality space online; and a store operation unit configured to run a store which sells real a plurality of products that are used in the real world and a plurality of virtual products, which are used in the virtual reality space. A user can purchase both real products and virtual products using a user account that exists on a game user network that was built for game users.

Optional combinations of the aforementioned constituting elements, and implementations of the invention in the form of apparatuses, methods, systems, programs, and recording mediums having embodied thereon programs may also be practised as additional modes of the present invention.

Embodiments will now be described, by way of example only, with reference to the accompanying drawings which are meant to be exemplary, not limiting, and wherein like elements are numbered alike in several Figures, in which:
Fig. 1 shows the configuration of a virtual reality space provision system according to an embodiment of the present invention;
Fig. 2 shows the hardware configuration of the main server of Fig. 1;
Fig. 3 shows the hardware configuration of a game device exemplifying the user terminal of Fig. 1;
Fig. 4 is a block diagram showing the basic functions of the main server of Fig. 1;
Fig. 5 shows a scenery in a town built in the virtual reality space;
Fig. 6 is a flowchart showing the basic operation of the virtual reality provision system according to the embodiment;
Fig. 7A shows an example of a point management table;
Fig. 7B shows an example of an item/point exchange table;
Fig. 8 shows an example of a voting card;
Fig. 9 is a flowchart showing the operation of a football pool game according to Example 1.
Fig. 10 is a block diagram showing the functions of the main server of Fig. 1 according to Example 2;
Fig. 11 is a block diagram showing the functions of the main server of Fig. 1 according to Example 3;
Fig. 12 shows an example of an electronic bulletin board showing a topic related to the virtual reality space;
Fig. 13 is a block diagram showing the functions of the main server of Fig. 1 according to Example 4;
Fig. 14 is a block diagram showing the functions of the shop operation unit of Fig. 13;
Fig. 15 shows an example of a product display screen displayed by the display control unit of Fig. 14;
Fig. 16 shows a price list of products displayed on the screen of Fig. 15;
Fig. 17 shows a first example of software configuration of the virtual reality space provision system according to the embodiment;
Fig. 18 shows a second example of software configuration of the virtual reality space provision system according to the embodiment; and
Fig. 19 shows a third example of software configuration of the virtual reality space provision system according to the embodiment.

The invention will now be described by reference to the preferred embodiments. This does not intend to limit the scope of the present invention, but to exemplify the invention.

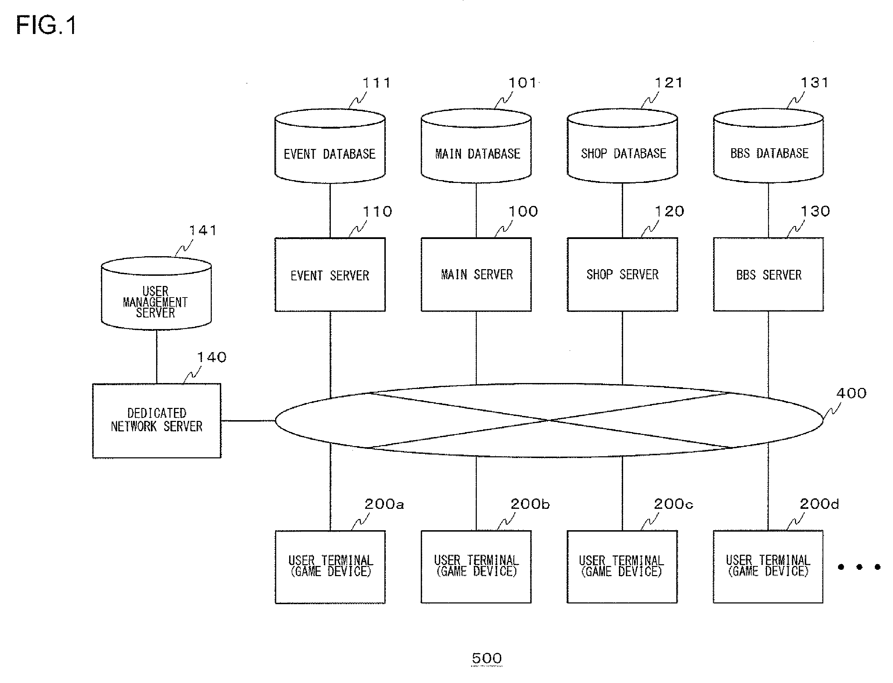

Fig. 1 shows the configuration of a virtual reality space provision system according to an embodiment of the present invention. The virtual reality space provision system 500 comprises a main server 100, an event server 110, a shop server 120, a BBS server 130, a dedicated network server 140, and a plurality of user terminals 200a-200d. The components are connected via a network (e.g., the Internet) 400. The main server 100, the event server 110, the shop server 120, the BBS server 130, and the dedicated network server 140 are connected to a main database 101, an event database 111, a shop database 121, a BBS database 131, and a user management database 141, respectively.

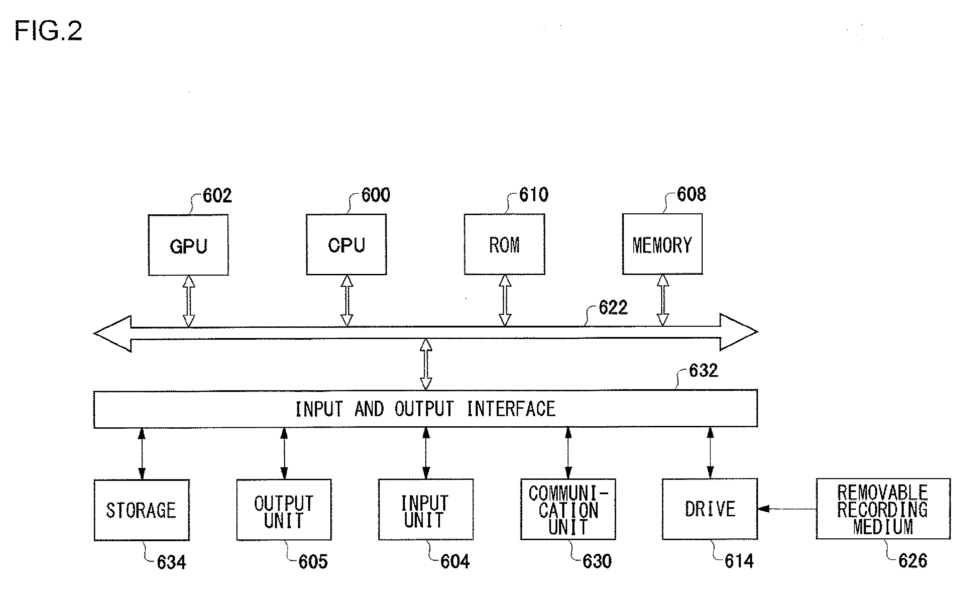

Fig. 2 shows the hardware configuration of the main server 100 of Fig. 1. The main server 100 comprises, as its principal components, a main CPU 600, a graphics processor unit (GPU) 602, an input unit 604, an output unit 605, a drive 614, a main memory 608, and a ROM 610. The main CPU 600 controls signal processing and server elements in accordance with program including an application for managing a virtual reality space and avatars performing activities in the space. The GPU 602 performs image processing.

The components are primarily connected to each other via a bus line 622. An input and output interface is connected to the bus line 622. Connected to the input and output interface are a storage 634 implemented by, for example, a hard disk or a nonvolatile memory, an output unit 605 implemented by, for example, a display or a speaker, an input unit 604 implemented by, for example, a keyboard, a mouse, a microphone, a communication unit 630 implemented by, for example, an USB interface, an IEEE1394 interface, a network interface for LAN or wireless LAN, and a drive 614 for driving a removable recording medium 626 such as a magnetic disk, an optical disk, or a semiconductor memory. The main database 101 of Fig. 1 may be built in the storage 634 or built in a separate database server.

The main CPU 600 controls the operation of the entirety of the main server 100 by executing an operating system program stored in a hard disk, etc. The main CPU 600 loads application programs and data read from an optical disk such as CD, DVD, BD or downloaded via a communication network into the main memory 608 and executes the program. The main CPU 600 controls the input and output of signals from the input unit 604 generated by user control, the input and output of data from the removable recording medium 626, and the input and output of data in the communication unit 630, the signals and the data being obtained via the input and output interface 632. The CPU 600 also controls the drive 614.

The GPU 602 has a function of a geometry transfer engine for coordinate conversion and so on, and a function of a rendering processor. The GPU 602 draws an image according to a rendering instruction from the main CPU 600 and then stores the drawn image in a non-illustrated frame buffer. In this embodiment, the GPU 602 uses three-dimensional (3D) graphics to build a virtual reality space online. The GPU 602 calculates coordinates of a polygon forming a three-dimensional object by performing geometric computation. Further, the GPU 602 performs, in a rendering process, calculations to create an image obtained by shooting the three-dimensional object by a virtual camera, i.e., the GPU 602 performs perspective conversion (calculation of the coordinate values defining the vertexes of each polygon in the three-dimensional object and occurring as the object's vertexes are projected on a virtual camera screen). The image data ultimately obtained is written in a frame buffer. The GPU 602 then outputs a video signal corresponding to the created image.

The main server 100 constructed as described above reads BIOS from the nonvolatile memory, which is part of the storage 634, and performs an initialization process, when the server 100 is turned on, for example. Subsequently, the operating system program is read so that the main CPU 600 executes the operating system program. By executing the operating system program, the main CPU 600 controls the components of the main server 100 in a centralized manner.

The hardware configuration of the event server 110, the shop server 120, the BBS server 130, and the dedicated network server 140 is basically the same as the configuration of the main server 100, the difference being in the type of application programs executed.

The user terminal 200 may be any device that can be connected to the network 400. For example, the user terminal 200 may be a game device, a PC, a cell phone, or a smart phone. Hereinafter, a game device capable of providing the same graphic environment to all users will be described as an example of the user terminal 200.

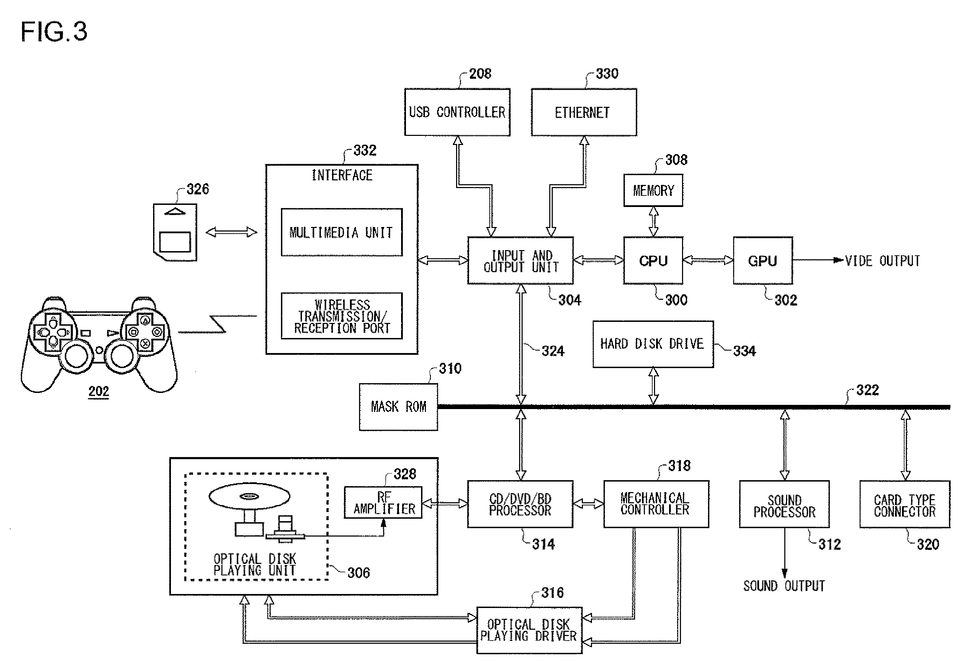

Fig. 3 shows the hardware configuration of a game device exemplifying the user terminal 200 of Fig. 1. The game device includes, as its principal components, a main CPU 300, a GPU 302, an input and output processor 304, an optical disk playing unit 306, a main memory 308, a MASK ROM 310, and a sound processor 312. The main CPU 300 controls signal processing and device elements based on various programs such as a game, an electronic mail application, a Web browser application, etc. The GPU 602 performs image processing. The input and output processor 304 performs processes for interfacing between an external device and the internal components and for maintaining downward compatibility. The optical disk playing unit 306 plays an optical disk such as a BD, DVD, CD having an application program or multimedia data recorded therein. The main memory 308 serves as a work area for the main CPU 300 and a buffer for temporarily storing data read out from an optical disk. The MASK ROM 310 stores operating system programs to be executed mainly by the main CPU 300 and the input and output processor 304. The sound processor 312 performs audio signal processing.

The game device is further provided with a CD/DVD/BD processor 314, an optical disk playing driver 316, a mechanical controller 318, a hard disk drive 334, and a card-type connector (e.g., PC card slot) 320. The CD/DVD/BD processor 314 subjects a disk signal read out from a CD/DVD/BD by the optical disk playing unit 306 and then amplified by an RF amplifier 328 to, for example, error correction processing (e.g., cross interleave Reed-Solomon coding: CIRC), expansion decoding processing, etc., thereby reproducing (reconstructing) data recorded on the CD/DVD/BD. The optical disk playing driver 316 and the mechanical controller 318 perform rotation control of a spindle motor of the optical disk playing unit 306, focus/tracking control of an optical pickup, loading control of a disk tray, etc.

For example, the hard disk drive 334 stores saved data for the application program or the game read by the optical disk playing unit 306, or stores data such as photos, moving images, and music acquired via the input and output processor 304. The card-type connector 320 is a connection port for a communication card, an external hard disk drive, or the like.

These components are connected with each other mainly via bus lines 322, 324, etc. The main CPU 300 and the GPU 302 are connected with each other via a dedicated bus line. Additionally, the main CPU 300 and the input and output processor 304 are connected with each other via an SBUS. The input and output processor 304, the CD/DVD/BD processor 314, the MASK ROM 310, the sound processor 312, the card-type connector 320, and the hard disk drive 324 are connected with each other via the SSBUS.

The main CPU 300 executes an operating system program for the main CPU stored in the MASK ROM 310 to control the entire operation of the game device. Further, the main CPU 300 reads data from an optical disk such as a CD, DVD, or BD and loads the data into the main memory 308. Furthermore, the main CPU 300 executes various application programs downloaded over the communication network to control operations of playing a game, drafting or editing an e-mail, browsing a Web page, etc.

The input and output processor 304 executes an operating system program for use by the input and output processor stored in the MASK ROM 310 to control signals from the controller 202 generated by user control and to control data input/output between the game device and a memory card 326 which stores the setting of a game, the contents and addresses of e-mails, the URLs of Web sites, or the like. The input and output processor 304 further controls data input/output between the USB controller 208 and the game device, between an Ethernet 330 and the game device, between an IEEE 1394 terminal (not shown) and the game device, between a PC card slot (not shown) and the game device, and so on. Further, the input and output processor 304 performs data input and output between the device and the memory card 326 via the PC card slot (not shown). Information from the controller 202 and the memory card is exchanged via an interface 332 that includes a multimedia slot and a wireless transmission/reception port.

The GPU 302 has a function of a geometry transfer engine for coordinate conversion and so on, and a function of a rendering processor. The GPU 302 draws an image according to a rendering instruction from the main CPU 600 and then stores the drawn image in a non-illustrated frame buffer. When an application program recorded on an optical disk (e.g., a game) uses three-dimensional (3D) graphics, the GPU 302 calculates coordinates of a polygon forming a three-dimensional object by performing geometric computation. Further, the GPU 302 performs, in a rendering process, calculations to create an image obtained by shooting the three-dimensional object by a virtual camera, i.e., the GPU 302 performs perspective conversion (calculation of the coordinate values defining the vertexes of each polygon in the three-dimensional object and occurring as the object's vertexes are projected on a virtual camera screen). The image data ultimately obtained is written in a frame buffer. The GPU 302 then outputs a video signal corresponding to the created image.

The sound processor 312 has an adaptive differential pulse code modulation (ADPCM) decoding function, an audio signal reproducing function, a signal modulating function, etc. The ADPCM decoding function is a function of reading out waveform data from a non-illustrated sound buffer built in or externally connected to the sound processor 312, to reproduce and output an audio signal for, e.g., sound effects. The signal modulating function also serves as a sampling sound source for producing an audio signal for, e.g., music sound or sound effects from waveform data stored in the sound buffer.

For example, when the game device constructed as described above is turned on, the operating system programs for the main CPU 300 and the input and output processor 304 are read out from the MASK ROM 310. The main CPU 300 and the input and output processor 304 execute the respective operating system programs. By executing the operating system program, the main CPU 300 controls the components of the game device in a centralized manner. Further, the input and output processor 304 controls signal input/output between the controller 202, the memory card 326, or the like, and the game device. Also, by executing the operating system program, the main CPU 300 performs initialization such as operation check and so on. The main CPU 300 then controls the optical disk playing unit 306 to read out an application program for a game or the like from an optical disk and load the application program in the main memory 308, whereupon the main CPU 300 executes the program. By executing the application program, the main CPU 300 controls the GPU 302 and the sound processor 312 in accordance with user control received from the controller 202 via the input and output processor 304 so as to control image display and production of sound effects, music sound, or the like.

Also, to play a movie, etc. recorded on an optical disk, the main CPU 300 controls the GPU 302 and the sound processor 312 in accordance with user control (commands) received from the controller 202 via the input and output processor 304 so as to control image display and production of sound effects, music sound, or the like, of the movie being played back from the optical disk.

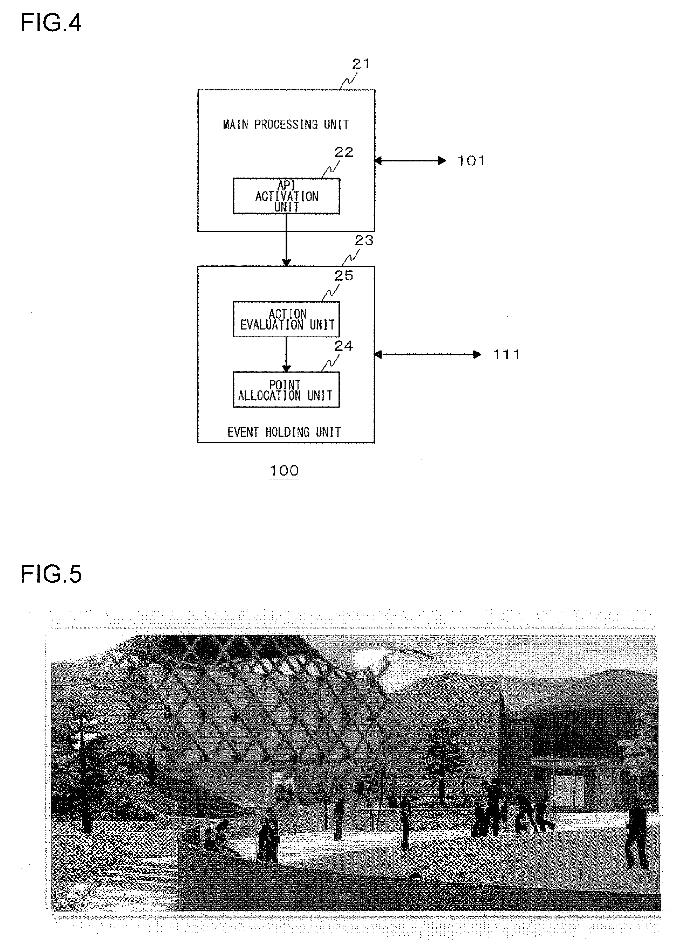

Fig. 4 is a block diagram showing the basic functions of the main server 100 of Fig. 1. The main server comprises a main processing unit 21 and an event holding unit 23. The main processing unit 21 builds a virtual reality space online. The main processing unit 21 uses a program and data stored in the main database 101 to build the virtual reality space.

A single virtual town is formed in the virtual reality space, where a lot of avatars undertake various activities. Each avatar is assigned a personal space as a residence, where the avatar can arrange furniture of the avatar as desired. The avatar can invite a friend. Various lounges are provided in the virtual reality space so that users can communicate with each other via the avatars. A game space, theater, market place (hereinafter, referred to as a shop as needed), cafe, etc. are located as lounges.

Processes in a lounge are written in a predetermined script language (e.g., LUA). An object written in the script language calls an API (application program interface) stored in the event database 111. To hold an event in the virtual reality space, the main processing unit 21 uses an activation unit 22 to start an API for the event (hereinafter, referred to as an event application system as needed). An event is expected to be held in the lounge but may be held outside the lounge.

By uploading an event application system to the event server 110, the event application system can be updated according to a timing schedule different from that of the event server 110.

The event holding unit 23 holds an event primarily within the lounge. Specific examples of events will be described later. An action evaluation unit 25 evaluates an action of a user participating via the avatar in the virtual reality space. In particular, the unit 25 positively evaluates definitive actions of the user in a community within the virtual reality space. More specifically, the unit 25 evaluates participation in an event held in the virtual reality space, behavior of a user in the event, or whether the user wins or loses a game in the event. For example, the user's behavior may be a helpful remark in the event.

A point allocation unit 24 allocates points that can be used in the virtual reality space to the user in accordance with the evaluation by the action evaluation unit 25. Points can be exchanged with a virtual product (hereinafter, referred to as an item as needed) used in the virtual reality space. Points cannot be exchanged with money or points in the real world.

Actions other than those related to the event may also be subject positive evaluation and point allocation. For example, actions such as responses to a questionnaire or invitation of a new user, which contribute to the maintenance, operation, and growth of the community in the virtual reality space, may also be positively evaluated and given points. Points of each user are not basically depreciated unless they are exchanged with an item, invalidated due to expiration of the term, or exchanged between users.

The event application system uses the event database 111 provided separate from the main database 101, which stores data necessary to build the virtual reality space, to manage the status of participation of users in events and points collected by the users. The system also manages the status of acquisition of items.

Fig. 5 shows a scenery in a town built in the virtual reality space. Various facilities and squares are provided in the town so that a plurality of avatars can communicate with each other.

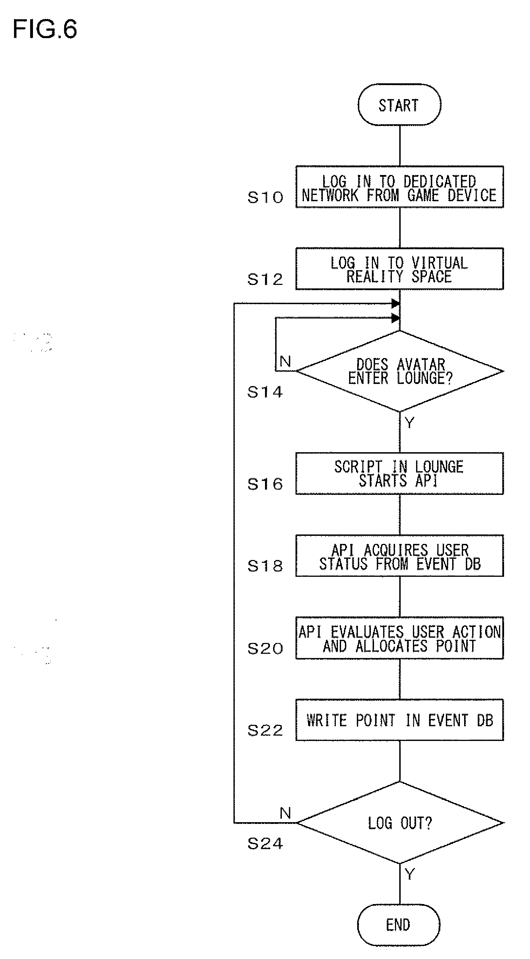

Fig. 6 is a flowchart showing the basic operation of the virtual reality provision system 500 according to the embodiment. A user of a game device should obtain an account and a password to log in to a game user network especially built for game users. Issuance and management of accounts and passwords are performed by the dedicated network server 140 and the user management database 141.

When an account and a password are entered by user control, the game device transmits the account and the password to the dedicated network server 140. When the user is authenticated by the dedicated network server 140, the user can log in to the game user network (S10). Login of the game device to the virtual reality space from within the game user network is initiated by user control (S12).

When an avatar enters a lounge in the virtual reality space (Y in S14), an object located in the lounge and written in a script language starts the event application system managed by the event server 110 and the event database 111 (S16). The event application system accesses the event database 111 and acquires the status of participation of the user owing the avatar to an event and the status of, for example, points owned (S18).

The event application system evaluates a definitive action by the user and allocates a point to the user (S20). The system sends the point to the event database 111, updating the database 111 accordingly (S22). In this process, the system also updates the status of participation in the event (participation history).

Steps S14-S22 described above are continued until the user logs out from the virtual reality space (Y in S24).

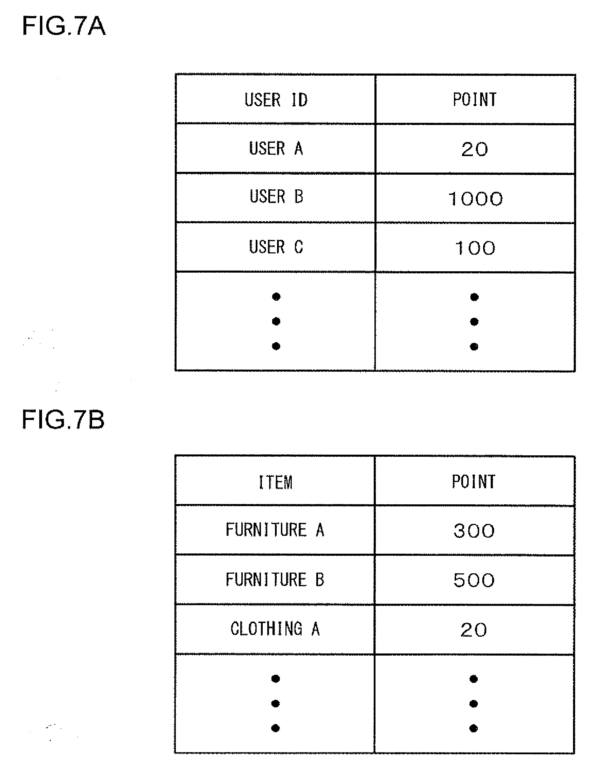

Fig. 7A shows an example of a point management table. The point management table is built in the event database 111 and manages points owned by users. By logging in to the virtual reality space, users can verify points accrued for himself or herself. The user can use the points in exchange for an item. The user can also give the points to other users.

Fig. 7B shows an example of an item/point exchange table. The user can exchange the points owned by the user with furniture provided in the personal space or clothing worn by the avatar. Exchange can take place in a market place described later.

Specific examples of events and methods of allocating points will now be described. Example 1 concerns a football pool as an example of an event. A lounge to run a football pool is provided in the virtual reality space. A voting station, a screen showing a game, a point exchange, etc. are provided in the lounge. An avatar enters the lounge, receives a voting card before the game begins, and enters a prediction of the result of the game.

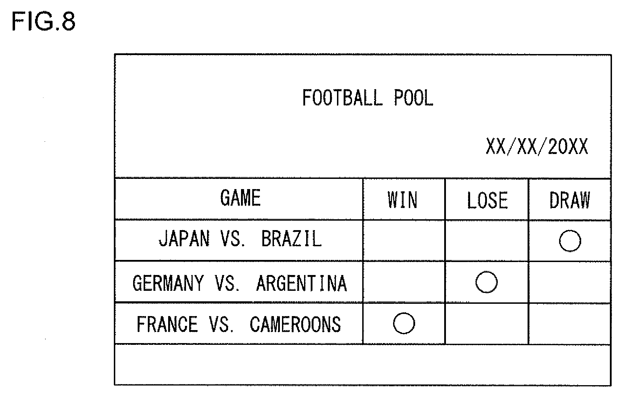

Fig. 8 shows an example of a voting card. The user marks the voting card to indicate win, lose, or draw for the game. Acquisition of a voting card and an act of voting can be performed at no charge. Users who made a successful prediction are allocated a point. The points of a user who made an unsuccessful prediction are not depreciated.

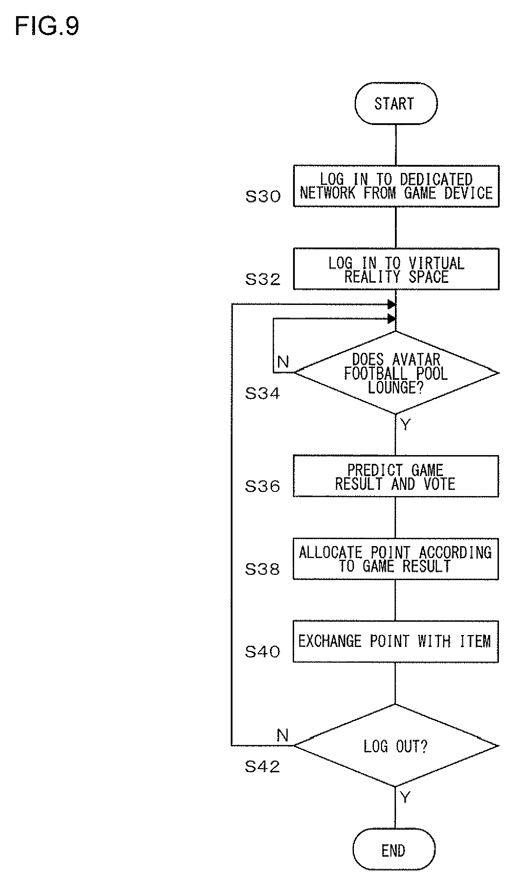

Fig. 9 is a flowchart showing the operation of a football pool game according to Example 1. When an account and a password are entered by user control, the game device transmits the account and the password to the dedicated network server 140. When the user is authenticated by the dedicated network server 140, the user can log in to the game user network (S30). Login of the game device to the virtual reality space from within the game user network is initiated by user control (S32).

When an avatar enters a football pool lounge in the virtual reality space (Y in S34), an object located in the lounge and written in a script language starts the event application system designed for a football pool and managed by the event server 110 and the event database 111. The avatar predicts the result of the football game and submits a ballot in a voting station (S36).

The event application system allocates a point in accordance with the result of the game, i.e., allocates a point to the user owing the avatar making a successful prediction. The point is sent to the event database 111 so that the point of the relevant user is updated. The avatar can exchange the point with an item (e.g., a football uniform worn by the avatar) at the point exchange in the lounge (S40).

Steps S34-S40 described above are continued until the user logs out from the virtual reality space (Y in S42).

Example 2 concerns a case where points are allocated in accordance with the level of achievement in the game stored in the game device (i.e., the level of experience in the game). When the user clears a condition (mission) set in the game software while playing the game, the game software allocates an item (hereinafter, referred to as trophy) that depends on the condition cleared. A mission may be appropriately set in the game software. For example, winning in a special race in a racing game, beating a specific enemy character in a match-up game, etc., may be a mission to be cleared.

A plurality of types of trophies are made available. For example, four grades (types) of trophies, bronze, silver, gold, and platinum are made available. The game software assigns missions to the three grades, bronze, silver, and gold in the ascending order of difficulty in achievement. Accordingly, a bronze trophy is assigned to a mission easy to achieve. A gold trophy is assigned to a mission difficult to achieve is assigned. A platinum trophy is not mapped into an individual mission in the game. For example, the system software gives a platinum trophy to the user when the user clears all the missions provided by the game software.

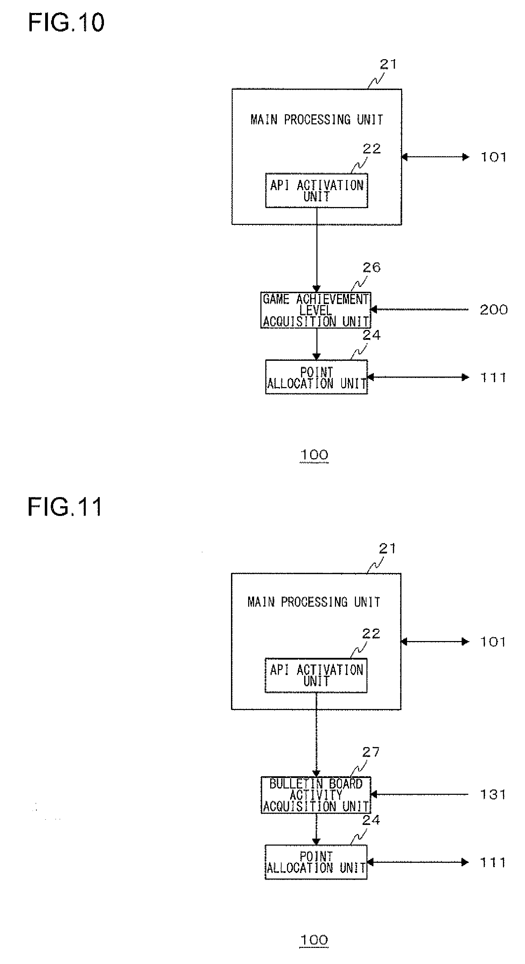

Fig. 10 is a block diagram showing the functions of the main server 100 of Fig. 1 according to Example 2. The main server 100 comprises a main processing unit 21, a game achievement level acquisition unit 26, and a point allocation unit 24. To exchange the level of achievement in the game with a point, the main processing unit 21 uses the activation unit 22 to start an API for the exchange.

The game achievement level acquisition unit 26 acquires the level of achievement in the game (for example, the trophy) stored in the game device via the network 400.
The point allocation unit 24 gives a point that depends on the achievement level. For example, the higher the grade, the higher the point given. The point allocation unit 24 acquires the points of the user of the game device from the event database 111, adds a point to be assigned to the acquired points, and stores the resultant points in the original location in the event database 111.

Example 3 concerns a case where points are allocated depending on activities in an online electronic bulletin board (BBS). There are a lot of Q&A sites on the web. Generally, in the bulletin board, a questioner enters a question in an electronic bulletin board and an answerer answers the question.

Fig. 11 is a block diagram showing the functions of the main server 100 of Fig. 1 according to Example 3. The main server 100 comprises a main processing unit 21, a bulletin board activity acquisition unit 27, and a point allocation unit 24. To exchange a bulletin board activity with a point, the main processing unit 21 uses the activation unit 22 to start an API for the exchange.

The bulletin board activity acquisition unit 27 acquires evaluation or frequency of user postings on those topics in the online electronic bulletin board related to the virtual reality space via the network 400. An online electronic bulletin board may be an open bulletin board located on the Web. Alternatively, it may be a closed bulletin board located on the game user network. Postings and evaluation thereof in the electronic bulletin board are managed by the BBS server 130 and the BBS database 131. Evaluation on the postings is also scored. The more frequent a posting is chosen as the best answer, the higher the evaluation value.

The point allocation unit 24 allocates points in accordance with the evaluation on the posting or the frequency of postings acquired from the bulletin board activity acquisition unit 27. The higher the evaluation or the higher the frequency of postings by the answerer, the higher the point allocated. The point allocation unit 24 acquires the points of the user requesting the exchange of points from the event database 111, adds a point to be assigned to the acquired points, and stores the resultant points in the original location in the event database 111.

In Example 3, points managed by the event database 111 may be given from the questioner to the answerer. In this case, the point allocation unit 24 transfers some of the points of the questioning user to the answering user in the event database 111. Points may be transferred to only the answerer selected as giving the best answer. Alternatively, points may be transferred to all answerers.

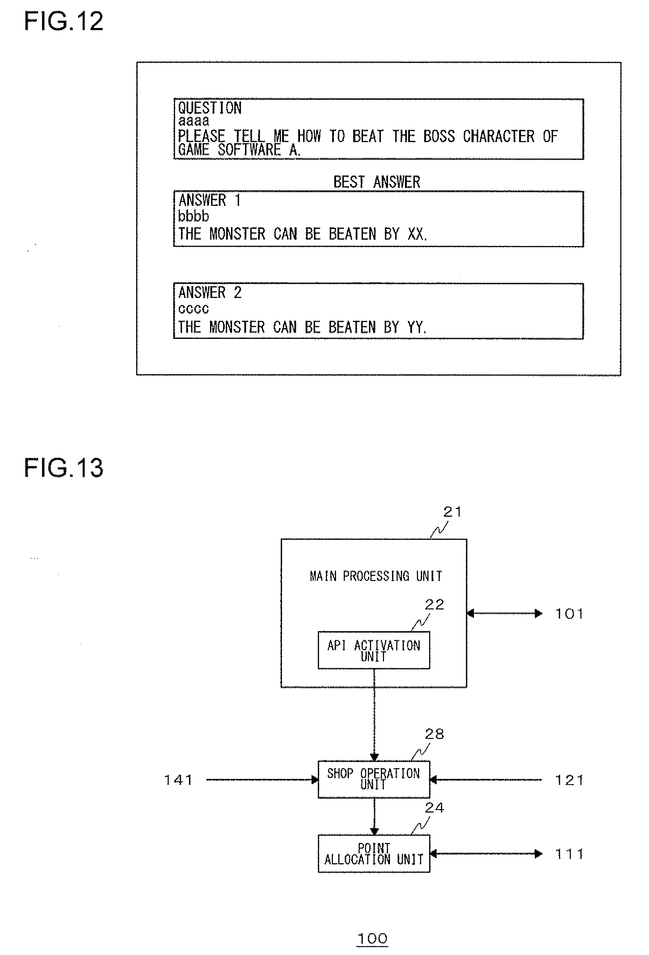

Fig. 12 shows an example of an electronic bulletin board showing a topic related to the virtual reality space. The questioner aaaa is asking how a boss character in game software A can be defeated. In response, bbbb provides the best answer.

Example 4 concerns a case where points are allocated in accordance with the purchase of a product in the virtual reality space. Fig. 13 is a block diagram showing the functions of the main server 100 of Fig. 1 according to Example 4. The main server 100 comprises a main processing unit 21, a shop operation unit 28, and a point allocation unit 24. When an avatar enters a shop in the virtual reality space, the main processing unit 21 uses the activation unit 22 to start an API to run the shop.

The shop operation unit 28 runs a shop that sells real products that are used in the real world. For example, the shop sells game software, film content, comic content, or the like. The product may be delivered to the game device via the network 400. Alternatively, the product may be delivered to the user's house as packaged content. The user of the game device can own the user's own account on the game user network to purchase products. The user can purchase products using the account. Money can be deposited to the account from a credit card or a terminal provided in a convenience store, etc. The terminal is designed to support electronic money deposit.

When notified by the shop operation unit 28 that the user purchased a real product, the point allocation unit 24 gives a point to the purchasing user. The higher the price of the product purchased, the higher the point given. The point allocation unit 24 acquires the points of the user purchasing the product from the event database 111, adds a point to be assigned to the acquired points, and stores the resultant points in the original location in the event database 111.

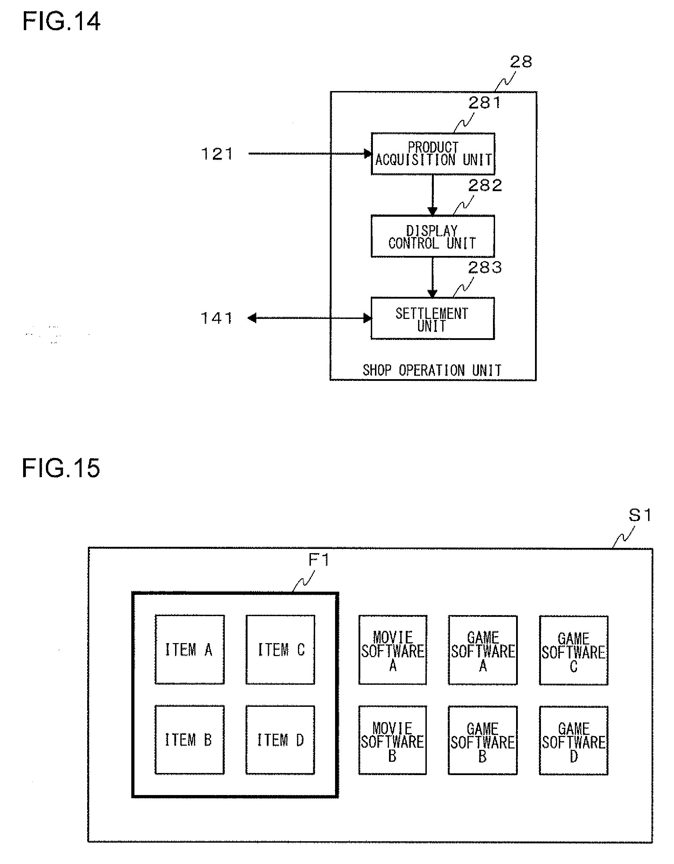

Fig. 14 is a block diagram showing the functions of the shop operation unit 28 of Fig. 13. A product acquisition unit 281 acquires product information from the shop database 121. A display control unit 282 displays acquired product information on a screen. When a product is purchased, a settlement unit 283 deducts money from the account of the user purchasing the product managed by the user management database 141 to fund the account of the shop operator.

The shop operation unit 28 is capable of configuring a shop to sell both real products that are used in the real world and virtual products (items) that are used in the virtual reality space. In this case, too, the shop is designed so that the user can purchase both kinds of products using the same user account on the game user network. In this process, the price of a virtual product (item) is designed to be lower than the price of a real product such that the user can recognize a difference in the nature of both kinds of products. For example, the lowest price of real products may be 5-200 times higher than that of the highest price of virtual products.

Alternatively, the shop operation unit 28 (the display control unit 282, to be more specific) may display virtual products and real products on the same screen such that the difference between them can be recognized by the user. For example, virtual products and real products may be displayed using different colors, or virtual products may be marked by frames so that the user can recognize the difference.

Fig. 15 shows an example of a product display screen displayed by the display control unit 282 of Fig. 14.
Real products (movie software A, B, game software A-D) and virtual products (items A-D) are displayed side by side in the screen S1. The virtual products (items A-D) are marked by a frame F1 so that the user can recognize the difference between real products and virtual products.

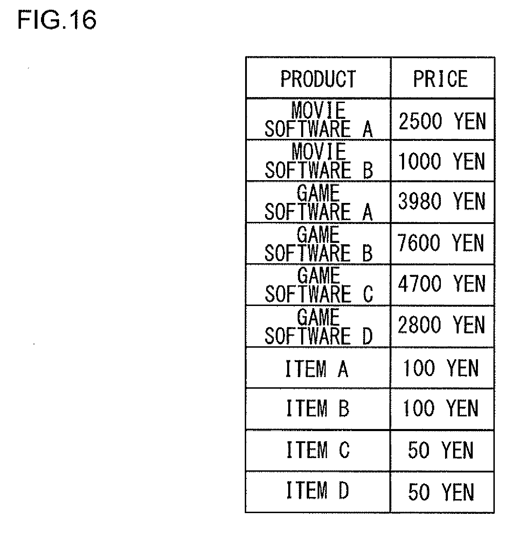

Fig. 16 shows a price list of products displayed on the screen of Fig. 15. In this case, the price ratio between the lowest price of the real products and the highest price of the virtual products is set to be 10. In this way, it is expected that the user deciding to buy a product can recognize whether the user is purchasing a real product or a virtual product by viewing the price.

In Example 4, points may not necessarily be given. Further, the method of running a shop explained in Example 4 is applicable to the virtual reality space provision system 500 not provided with a point allocation system.

As described above, according to the virtual reality space provision system 500 of the embodiment, participation of participants to a community can be maintained and promoted by giving points to loyal users in return for community activities in the virtual reality space. By giving points to users having spent a lot of time playing a game or users active in a bulletin board, the users are given an incentive to participate in the community.

Example 4 is also designed to reduce the likelihood of purchasing a real product or a virtual product by mistake.

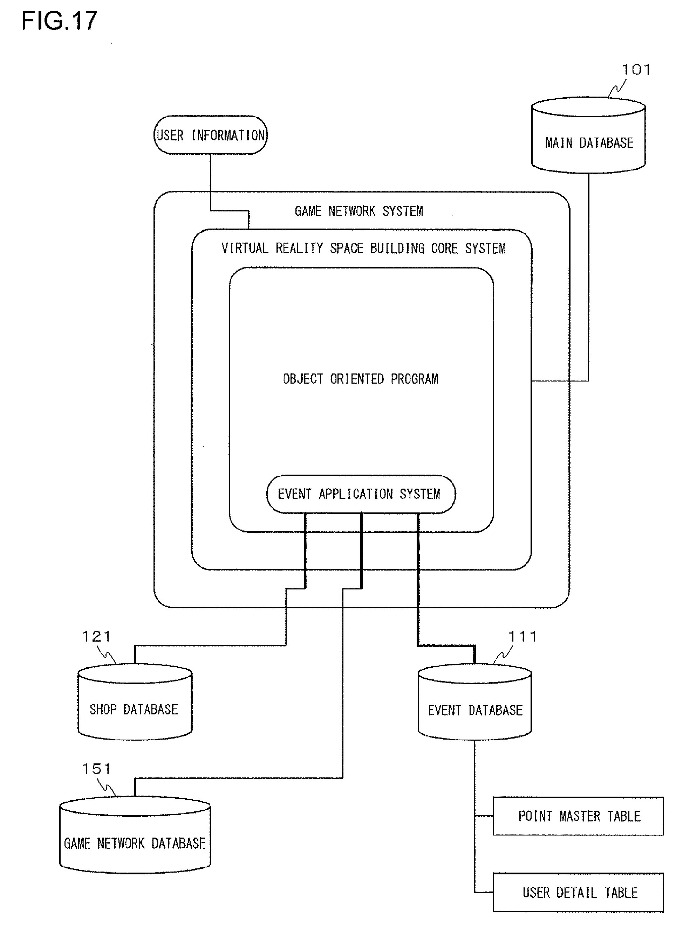

Fig. 17 shows a first example of software configuration of the virtual reality space provision system according to the embodiment. The virtual reality space provision system (hereinafter, referred to as a virtual reality space building core system) is written in a predetermined script language (e.g., LUA). LUA is an easily embeddable object oriented program that is light and efficient to run. The program and data to run the virtual reality space building core system are stored in the main database 101. The program is executed by the main server 100.

The virtual reality space building core system is hosted the game user network described above (hereinafter, referred to as game network system). Match-up games for multiple game users or games supporting many users can be implemented in the game network system. The program and data to run the game network system are stored in a game network database 151. The program is executed by a game network system server (not shown). The data stored in the game network database 151 includes the score, ranking, trophies won of each game user.

The game network system also hosts the shop system operating the shop described above. The program and data to run the shop system are stored in the shop database 121. The program is executed by the shop server 120. The data stored in the shop database 121 includes the history of products purchased by the game user in the shop and used in the real world or the virtual world.

The game network system server communicates with the main server 100 using server to server (S2S) communication. The game network system server and the shop database 121 also communicate using S2S. Each game user can log in to the virtual reality space or the shop via the game network system.

An event application system is written in a predetermined script language (e.g., LUA) and is hosted by the virtual reality space building core system. To hold an event inside and outside a lounge, the designer may build an event application system in the virtual reality space building core system. The program (indicated as object oriented program in Fig. 17) and data to run the event application system are stored in the event database 111. The program is executed by the event server 111. The program may be executed by the main server 100 instead of the event server 110.

A point master table and a user detail table are build in the event database 111. The point master table manages the points of the users. The user detail table manages the history of participation in events, history of winning and losing in the events, history of acquiring items, history of remarks made, etc. of the users.

The object oriented program (hereinafter, referred to as LUA object on the assumption that LUA is used) can locate an event in the virtual reality space not only by using the data managed by the event database 111 but also by using the data managed by the shop database 121 or the game network database 151. The LUA object may refer to at least one of the shop database 121 and the game network database 151 prior to holding an event and recommend participation to the event only to users assigned an attribute presumed to indicate interest in the event. More specifically, recommendation may be given to the avatar of the user active in the virtual reality space.

Thus, by configuring the event application system as an API of the virtual reality space building core system, the event can be held without substantially modifying the source code of the virtual reality space building core system when holding the event in the virtual reality space. Further, the content of the event can be corrected or modified only by modifying the source code of the LUA object without suspending the operation of the virtual reality space building core system. Accordingly, the event application system can be easily debugged.

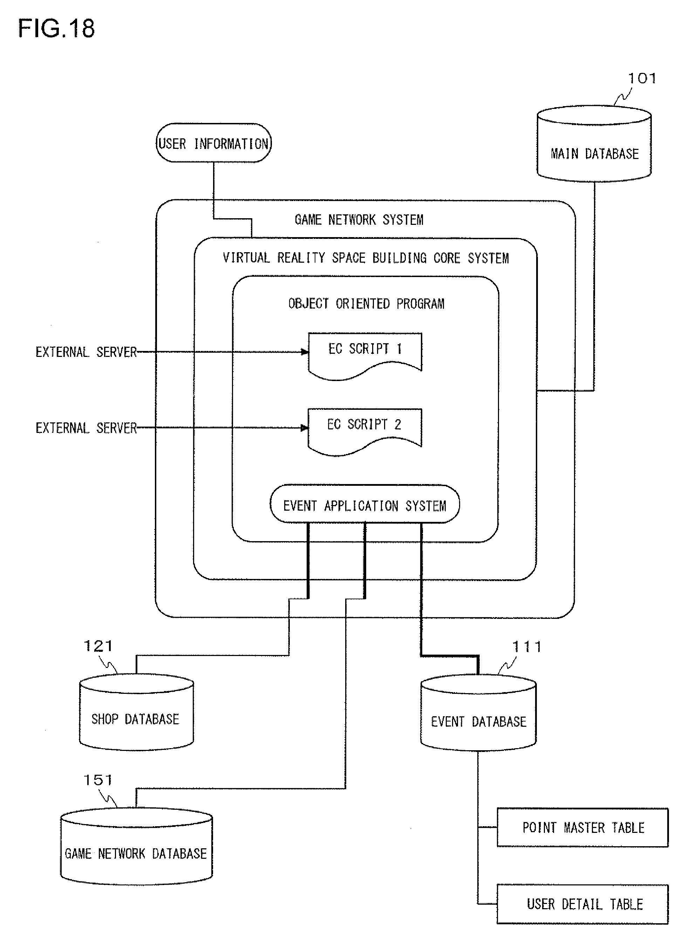

Fig. 18 shows a second example of software configuration of the virtual reality space provision system according to the embodiment. In the first example, building of an event application system using an LUA object is described. In the second example, a description will be given of building an event application system using a more general-purpose, open program language (e.g., extensible markup language: XML). An event controller script 1 (hereinafter, referred to as EC script 1) is uploaded to an external server (which may be an ordinary Web server) and transformed by the LUA object. The EC script 1 is transmitted securely from the external server to the event server 110. The LUA object sequentially receives parts of the EC script 1 in accordance with the progress of the event, interprets the parts, transforms the parts sequentially, and runs the program transformed.

The EC script 2 denotes a source code describing another event uploaded to another external server. Like the EC script 1, the EC script 2 is also securely transmitted from the external server to the event server 110. The LUA object sequentially receives parts of the EC script 2 in accordance with the progress of the event, interprets the parts, transforms the parts sequentially, and runs the program transformed.

Thus, by describing event content using a general-purpose, open program language instead of describing event content using an LUA object, participation of third parties is encouraged. It is expected that this helps users to hold events more actively in the virtual reality space and contributes to the growth of the community.

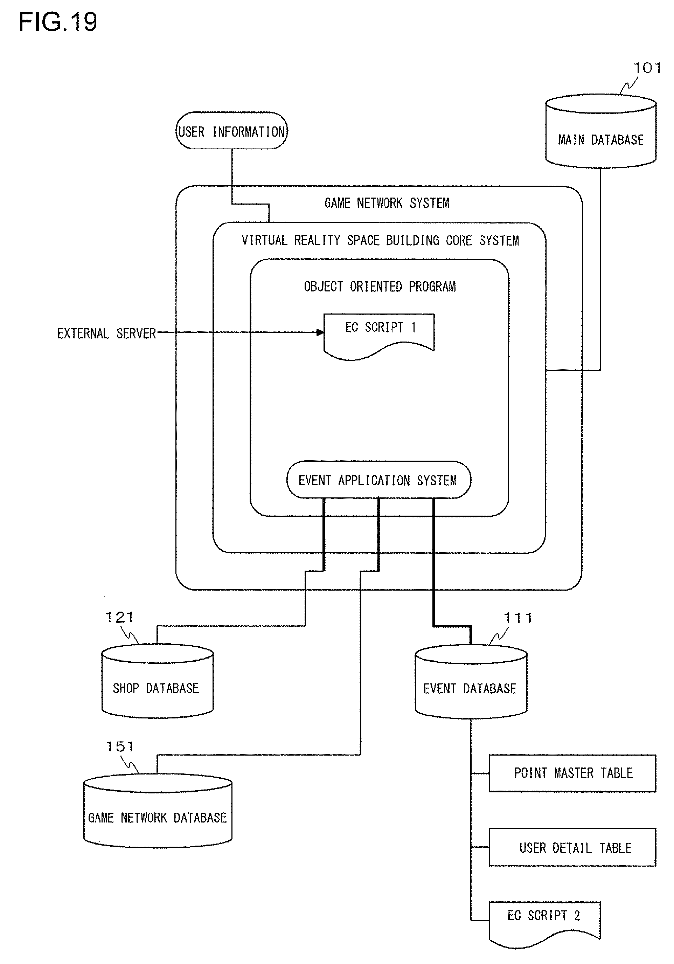

Fig. 19 shows a third example of software configuration of the virtual reality space provision system according to the embodiment. In the second example, transmission of an EC script from the external server to the event server 110 is described. The EC script (in the case of Fig. 19, EC script 2) may be uploaded to the event server 111. In this case, the LUA object sequentially receives parts of the EC script 2 in accordance with the progress of the event, interprets the parts, transforms the parts sequentially, and runs the program transformed.

As comparison with Example 2, Example 3 helps improve the speed of reading an EC script into the event server 110. Further, security is improved.

The external server shown in Figs. 18 and 19 may host the LUA object (not shown). In this case, the EC script may be loaded into the external server so that the loaded program can be executed (crowd computing).

Described above is an explanation based on an exemplary embodiment. The embodiment is intended to be illustrative only and it will be obvious to those skilled in the art that various modifications to constituting elements and processes could be developed and that such modifications are also within the scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A virtual reality space provision system (500) comprising:
a main processing unit (21) configured to build a virtual reality space online;
an action evaluation unit (25) configured to evaluate an action of a user participating in the virtual reality space by use of an avatar; and
a point allocation unit (24) configured to allocate a point to the user to be used in the virtual reality space in accordance with the evaluation.

2. The virtual reality space provision system (500) according to claim 1,
wherein the action evaluation unit (25) evaluates participation by a user in an event held in the virtual reality space, the behavior of the user in the event, or whether the user wins or loses a game in the event.

3. The virtual reality space provision system (500) according to claim 1 or 2,
wherein a user terminal (200) for accessing the virtual reality space provision system (500) is a game device (200),
the system (500) further comprising an achievement level acquisition unit (26) configured to acquire a level of user achievement in a game, the achievement level being stored in the game device (200),
wherein the point allocation unit (24) allocates a point depending on the level of user achievement.

4. The virtual reality space provision system (500) according to any one of claim 1 to claim 3, further comprising:
a bulletin board activity acquisition unit (27) configured to acquire, from an online electronic bulletin board related to the virtual reality space, an evaluation or frequency of user postings related to the virtual reality space,
wherein the point allocation unit (24) allocates a point depending on the evaluation or frequency.

5. The virtual reality space provision system (500) according to any one of claim 1 to claim 4, further comprising:
a store operation unit (28) configured to run a store, which sells a plurality of products that are used in the real world,
wherein, when notified by the store operation unit (28) that the user purchased a real product, the point allocation unit (24) allocates a point to the user.

6. The virtual reality space provision system (500) according to claim 5,
wherein the store also sells a plurality of virtual products, which are used in the virtual reality space, and
wherein user can purchase both real products and virtual products using a user account that exists on a game user network that was built for game users.

7. The virtual reality space provision system (500) according to claim 6,
wherein the price of a virtual product is designed to be lower than the price of a real product such that the user can recognize a difference in the nature of both the virtual product and the real product.

8. The virtual reality space provision system (500) according to claim 6 or 7,
wherein the store operation unit (28) displays the virtual products and the real products both on a screen such that the difference between the virtual products and the real products can be recognized by the user.

9. The virtual reality space provision system (500) according to any one of claim 1 to claim 8,
wherein a virtual product that is used in the virtual reality space can be exchanged a point, which cannot be exchanged with money or a point in the real world.

10. The virtual reality space provision system (500) according to any one of claim 2 to claim 8,
wherein the main processing unit (21) starts an application program interface when a point is allocated, and
wherein the application program interface uses an external database (111), which is separately provided from an internal database (101) configured to store data necessary to build the virtual reality space, to manage the status of participation by a user in an event and the points allocated to the user.

11. A virtual reality space provision system (500) comprising:
a main processing unit (21) configured to build a virtual reality space online; and
a store operation unit (28) configured to run a store, which sells a plurality of real products that are used in the real world and a plurality of virtual products, which are used in the virtual reality space,
wherein a user can purchase both real products and virtual products using a user account that exists on a game user network that was built for game users.

12. The virtual reality space provision system (500) according to claim 11,
wherein the price of a virtual product is designed to be lower than the price of a real product such that the user can recognize a difference in the nature of both the virtual product and the real product.

13. The virtual reality space provision system (500) according to claim 11 or 12,
wherein the store operation unit (28) displays the virtual products and the real products both on a screen such that the difference between the virtual products and the real products can be recognized by the user.

14. A virtual reality space provision method comprising:
building a virtual reality space online; and
evaluating an action of a user that participates in the virtual reality space by use of an avatar and allocating to the user a point, which can be used in the virtual reality space.

15. A non-transitory computer-readable storage medium storing a computer-executable program thereon, the program comprising:
a module configured to build a virtual reality space online; and
a module configured to evaluate an action of a user that participates in the virtual reality space by use of an avatar and to allocate to the user a point, which can be used in the virtual reality space.
